# EUROPÄISCHE PATENTANMELDUNG

(11) **EP 0 918 158 A2**
(43) Veröffentlichungstag der Anmeldung: **26.05.1999**
(21) Anmeldenummer: 98115061.8
(22) Anmeldetag: 11.08.1998
(51) Int. Cl.: F04B 1/04, F04B 53/10, B60T 8/40

(54) **Kolbenpumpe**

(30) Priorität: 20.11.1997 DE 19751421
(71) Anmelder: ROBERT BOSCH GMBH, 70442 Stuttgart (DE)
(72) Erfinder: Siegel, Heinz, Ing. (grad.), 70435 Stuttgart (DE)

(57) **Zusammenfassung**

Die Erfindung betrifft eine Kolbenpumpe (10) für eine schlupfgeregelte, hydraulische Fahrzeugbremsanlage. Für einen kompakten Aufbau der Kolbenpumpe (10) schlägt die Erfindung vor, Ein- und Auslaßventil (34, 36) in Form von Rückschlagventilen in einer Ventilbohrung (38) tangential zu einer Zylinderbohrung der Kolbenpumpe (10) in einem Pumpengehäuse (14) anzuordnen. Außer dem Vorteil eines kompakten und platzsparenden Aufbaus hat die Erfindung den Vorteil eines kleinen Totraums und damit eines guten Wirkungsgrades der Kolbenpumpe (10).

## Beschreibung

### Stand der Technik

Die Erfindung betrifft eine Kolbenpumpe nach der Gattung des Hauptanspruchs.

Eine derartige Kolbenpumpe ist bekannt aus der US-PS 48 75 741. Die bekannte Kolbenpumpe weist einen Kolben auf, der in einer Zylinderbohrung in einem Pumpengehäuse axialverschieblich geführt und mittels eines Exzenterantriebs zu einer in der Zylinderbohrung hin- und hergehenden Hubbewegung antreibbar ist. Ein- und Auslaßventile der bekannten Kolbenpumpe sind als Rückschlagventile ausgebildet und extern angeordnet.

### Vorteile der Erfindung

Bei der erfindungsgemäßen Kolbenpumpe mit den Merkmalen des Anspruchs 1 ist das Rückschlagventil in einer Ventilbohrung angeordnet, die tangential zur Zylinderbohrung und mit geringem Abstand von der Zylinderbohrung im Pumpengehäuse angeordnet ist. Diese Anordnung des Rückschlagventils hat zunächst den Vorteil, daß sie ein in axialer Richtung der Zylinderbohrung kurzbauendes Pumpengehäuse ermöglicht. Das Pumpengehäuse ist kompakt, die Kolbenpumpe beansprucht wenig Bauraum. Des weiteren läßt sich die tangentiale Ventilbohrung sehr dicht an der Zylinderbohrung anbringen. Dadurch ist ein mit von der Kolbenpumpe zu förderndem Fluid gefülltes Volumen zwischen der Zylinderbohrung und dem Rückschlagventil klein, es ist ein geringes Totvolumen zwischen Kolben und Rückschlagventil erzielbar. Durch die Verkleinerung des Totvolumens erhält man den Vorteil, daß der Wirkungsgrad der Kolbenpumpe verbessert wird. Des weiteren läßt sich die erfindungsgemäße Kolbenpumpe durch die tangential zur Zylinderbohrung im Pumpengehäuse angebrachte Ventilbohrung gut entlüften.

Die erfindungsgemäße Kolbenpumpe ist insbesondere als Pumpe in einer Bremsanlage eines Fahrzeugs vorgesehen und wird beim Steuern des Drucks in Radbremszylindern verwendet. Je nach Art der Bremsanlage werden für derartige Bremsanlagen die Kurzbezeichnungen ABS bzw. ASR bzw. FDR bzw. EHB verwendet. In der Bremsanlage dient die Pumpe beispielsweise zum Rückfördern von Bremsflüssigkeit aus einem Radbremszylinder oder aus mehreren Radbremszylindern in einen Hauptbremszylinder (ABS) und/oder zum Fördern von Bremsflüssigkeit aus einem Vorratsbehälter in einen Radbremszylinder oder in mehrere Radbremszylinder (ASR bzw. FDR bzw. EHB). Die Pumpe wird beispielsweise bei einer Bremsanlage mit einer Radschlupfregelung (ABS bzw. ASR) und/oder bei einer als Lenkhilfe dienenden Bremsanlage (FDR) und/oder bei einer elektrohydraulischen Bremsanlage (EHB) benötigt. Mit der Radschlupfregelung (ABS bzw. ASR) kann beispielsweise ein Blockieren der Räder des Fahrzeugs während eines Bremsvorgangs bei starkem Druck auf das Bremspedal (ABS) und/oder ein Durchdrehen der angetriebenen Räder des Fahrzeugs bei starkem Druck auf das Gaspedal (ASR) verhindert werden. Bei einer als Lenkhilfe (FDR) dienenden Bremsanlage wird unabhängig von einer Betätigung des Bremspedals bzw. Gaspedals ein Bremsdruck in einem oder in mehreren Radbremszylindern aufgebaut, um beispielsweise ein Ausbrechen des Fahrzeugs aus der vom Fahrer gewünschten Spur zu verhindern. Die Pumpe kann auch bei einer elektrohydraulischen Bremsanlage (EHB) verwendet werden, bei der die Pumpe die Bremsflüssigkeit in den Radbremszylinder bzw. in die Radbremszylinder fördert, wenn ein elektrischer Bremspedalsensor eine Betätigung des Bremspedals erfaßt oder bei der die Pumpe zum Füllen eines Speichers der Bremsanlage dient.

Die Unteransprüche haben vorteilhafte Ausgestaltungen und Weiterbildungen der im Hauptanspruch angegebenen Erfindung zum Gegenstand.

### Zeichnung

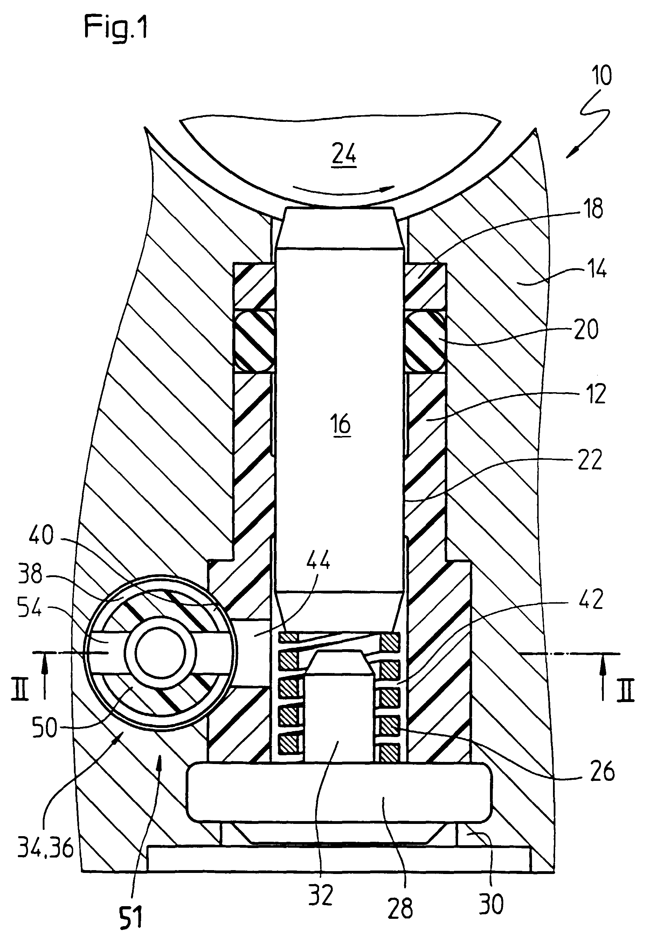

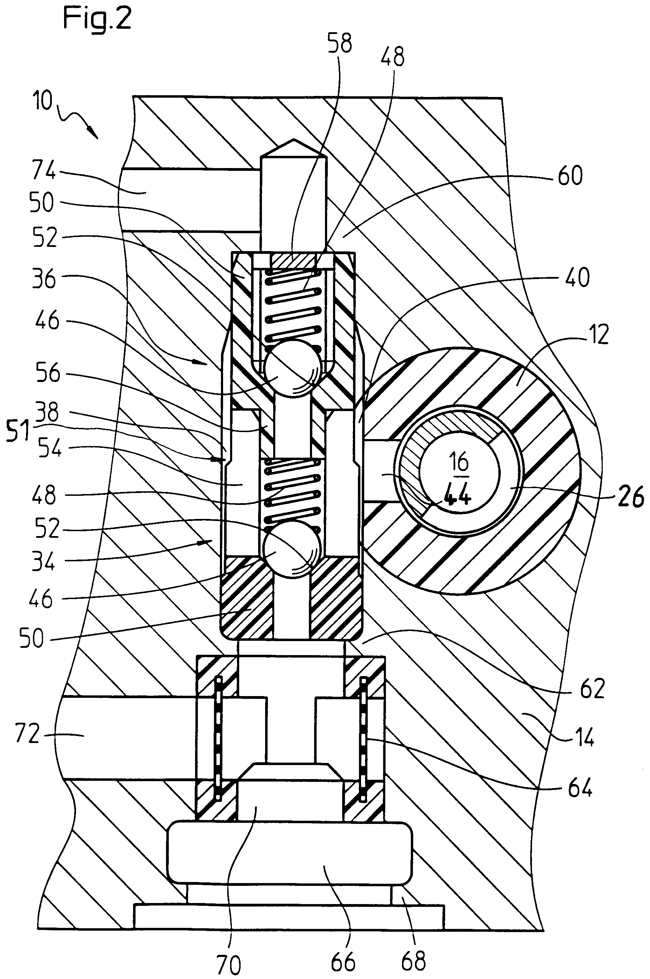

Die Erfindung wird nachfolgend anhand zweier in der Zeichnung dargestellter Ausführungsbeispiele erläutert. Es zeigen Figur 1 einen Achsschnitt einer erfindungsgemäßen Kolbenpumpe, Figur 2 einen Querschnitt der Kolbenpumpe aus Figur 1 entlang Linie II-II in Figur 1 und Figur 2 einen Achsschnitt eines zweiten Ausführungsbeispiels einer erfindungsgemäßen Kolbenpumpe.

### Beschreibung des ersten Ausführungsbeispiels

Die in Figuren 1 und 2 dargestellte, erfindungsgemäße Kolbenpumpe 10 weist eine Laufbuchse 12 auf, die in einen Hydraulikblock einer im übrigen nicht dargestellten, hydraulischen, schlupfgeregelten Fahrzeugbremsanlage eingesetzt ist, der ein Pumpengehäuse 14 bildet. In den Hydraulikblock sind weitere hydraulische Bauelemente wie Magnetventile, Hydrodämpfer, Speicher eingesetzt und untereinander und mit der Kolbenpumpe 10 hydraulisch verschaltet.

Die Laufbuchse 12 ist ein Kunststoff-Spritzgußteil. In ihr ist ein stielförmiger Kolben 16 axial verschieblich geführt. Die Führung des Kolbens 16 erfolgt zum einen an einem Stirnende der Laufbuchse 12 mittels eines Führungsrings 18, der am Stirnende der Laufbuchse 12 in das Pumpengehäuse 14 eingesetzt ist. Ein O-Ring 20 dichtet den Kolben 16 ab.

Als zweite Führung für den Kolben 16 weist die Laufbuchse 12 einen Führungsabschnitt 22 auf, der von einer in axialer Richtung kurzen, niedrigen, umlaufenden Verjüngung gebildet ist. Axial außerhalb des Führungsabschnitts 22 besteht ein enger Spalt zwischen der Laufbuchse 12 und dem Kolben 16.

Auf der Seite des Führungs- und O-Rings 18, 20 der Laufbuchse 12 ist ein elektromotorisch rotierend antreibbarer Exzenter 24 angeordnet, der in an sich bekannter Weise zum Antrieb des Kolbens 16 zu einer Hubbewegung dient. Eine auf einer dem Exzenter 24 abgewandten Stirnseite des Kolbens 16 in der Laufbuchse 12 angeordnete Schraubendruckfeder als Kolbenrückstellfeder 26 hält den Kolben 16 in Anlage am Umfang des Exzenters 24. Um einen Totraum der Kolbenpumpe 10 zu verkleinern hat die Kolbenrückstellfeder 26 einen rechteckigen Windungsquerschnitt. Der Totraum ist das in der Laufbuchse 12 verbleibende Volumen, wenn der Kolben 16 am Ende eines Förderhubs seine am weitesten in die Laufbuchse 12 eingeschobene Stellung einnimmt. Allgemeiner ausgedrückt wird die Verkleinerung des Totraums mit der Kolbenrückstellfeder 26 dadurch erreicht, daß deren einander zugewandte Windungsflächen zumindest näherungsweise komplementär zueinander sind, so daß bei vom Kolben 16 zusammengedrückter Kolbenrückstellfeder 26 die Zwischenräume zwischen den Federwindungen möglichst klein sind.

Ein dem Exzenter 24 abgewandtes Stirnende der Laufbuchse 12 wird von einem scheibenförmigen Verschlußelement 28 druckdicht verschlossen, das mit einer Verstemmung 30 im Pumpengehäuse 14 angebracht ist. Die Kolbenrückstellfeder 26 stützt sich gegen das Verschlußelement 28. Vom Verschlußelement 28 steht ein zapfenförmiger Verdrängungskörper 32 in einen Innenraum der Kolbenrückstellfeder 26 vor. Auch der Verdrängungskörper 32 verkleinert das Totvolumen der Kolbenpumpe 10. Der Verdrängungskörper 32 kann auch am Kolben 16 angeordnet sein (nicht dargestellt). Zusammen mit der Kolbenrückstellfeder 26 mit rechteckigem Windungsquerschnitt verkleinert der Verdrängungskörper 32 den Totraum der Kolbenpumpe 10 innerhalb der Laufbuchse 12 bei in die Laufbuchse 12 eingeschobenem Kolben 16 auf nahezu null. Die Verkleinerung des Totraums verbessert einen Wirkungsgrad der Kolbenpumpe 10. Weiterer Vorteil ist, daß sich die Kolbenpumpe 10 gut entlüften läßt.

Als Einlaßventil 34 und als Auslaßventil 36 weist die erfindungsgemäße Kolbenpumpe 10 zwei federbelastete Rückschlagventile auf, die in eine im Pumpengehäuse 14 tangential zur Zylinderbohrung angebrachte Ventilbohrung 38 eingesetzt sind (siehe Figur 2). Unter Zylinderbohrung wird die im Pumpengehäuse 14 vorgesehene, den Kolben 16 enthaltende Bohrung bzw. Öffnung verstanden. Die Ventilbohrung 38 hat wenig Abstand von der Zylinderbohrung. Die Ventilbohrung 38 schneidet die Laufbuchse 12 (Figur 1). An der Schnittstelle mit der Ventilbohrung 38 hat die Laufbuchse 12 einen zylinderförmigen, tangentialen Anschnitt, der mit der Ventilbohrung 38 fluchtet. Dadurch befinden sich die Ventile 34, 36 dicht an einem Verdrängungsraum 42 der Kolbenpumpe 10, sie kommunizieren über eine kurze radiale Verbindungsbohrung 44 in der Laufbuchse 12 mit dem Verdrängungsraum 42. Die räumlich dichte Anordnung von Einlaßventil 34 und Auslaßventil 36 unmittelbar am Verdrängungsraum 42 mit kurzer Verbindungsbohrung 44 sowie die Tatsache, daß ausschließlich eine Verbindungsbohrung 44 sowohl für den Pumpeneinlaß als auch für den Pumpenauslaß vorhanden ist, führt zu einem kleinen Totraum der Kolbenpumpe 10 und verbessert damit ihren Wirkungsgrad und stellt eine gute Entlüftbarkeit der Kolbenpumpe 10 sicher.

Beide Ventile 34, 36 weisen kugelförmige Ventilschließkörper 46 auf, die von je einer Ventilschließfeder 48 in Form einer Schraubendruckfeder gegen einen im Innern je einer Hülse 50, in der der Ventilschließkörper 46 und die Ventilschließfeder 48 angeordnet sind, angebrachten Ventilsitz gedrückt werden. Die Hülse 50 des Einlaßventils 34 ist mit Längsschlitzen 54 versehen, die einen Fluiddurchlaß in und von der Verbindungsbohrung 44 ermöglichen.

Die beiden Hülsen 50 sind zu einer Ventilpatrone 51 miteinander verbunden. Die Hülse 50 des Auslaßventils 36 weist einen in die Hülse 50 des Einlaßventils 34 nach Art einer Passung eingreifenden Kragen 56 auf, auf den die Hülse 50 des Einlaßventils 34 aufgepreßt ist. Einlaßventil 34 und Auslaßventil 36 sind auf diese Weise reibschlüssig mittels einer Preßpassung miteinander verbunden, sie bilden die das Einlaß- und das Auslaßventil 34, 36 umfassende Ventilpatrone 51.

Die Ventilschließfeder 48 des Einlaßventils 34 stützt sich gegen den Kragen 56 des Auslaßventils 36 ab. Zur Abstützung der Ventilschließfeder 48 des Auslaßventils 36 ist eine sternförmige Scheibe 58 mit Axialdurchlässen in die Hülse 50 des Auslaßventils 36 eingepreßt. Die die beiden Hülsen 50 umfassende Ventilpatrone 51 bildet eine Verdrehsicherung für die Laufbuchse 12 und stellt sicher, daß die in der Laufbuchse 12 vorgesehene Verbindungsbohrung 44 in die Ventilbohrung 38 mündet. Die Unterbringung von Ein- und Auslaßventil 34, 36 in der gemeinsamen Ventilpatrone 51 hat den Vorteil einer guten Handhabbarkeit der Ventile 34, 36, die Ventile 34, 36 können vor ihrem Einbau außerhalb des Pumpengehäuses 14 geprüft werden, ihr Einbau in das Pumpengehäuse 14 ist durch ihren außerhalb erfolgenden Zusammenbau vereinfacht. Die Hülsen 50 sind Kunststoff-Spritzgießteile. In axialer Richtung wird die Ventilpatrone 51 durch eine Ringstufe 60 auf der Seite des Auslaßventils 36 und durch eine Verstemmung 62 auf der Seite des Einlaßventils 34 in der Ventilbohrung 38 fixiert.

In Strömungsrichtung vor dem Einlaßventil 34 ist ein hohlzylindrisches Filtersieb 64 in die Ventilbohrung 38 eingesetzt und mittels einer Verschlußscheibe 66 in der Ventilbohrung 38 gehalten. Durch eine Verstemmung 68 ist die Verschlußscheibe 66 in der Ventilbohrung 38 gehalten und verschließt diese druckdicht. Das Filtersieb 64 ist auf einen mit der Verschlußscheibe 66 einstückigen, niedrigen Zapfen 70 aufgesteckt. Ein Pumpenein- und -auslaß erfolgt durch je eine im Pumpengehäuse 14 angebrachte Zuströmbohrung 72 und Abströmbohrung 74, die radial an beiden Enden in die Ventilbohrung 38 münden.

### Beschreibung des zweiten Ausführungsbeispiels

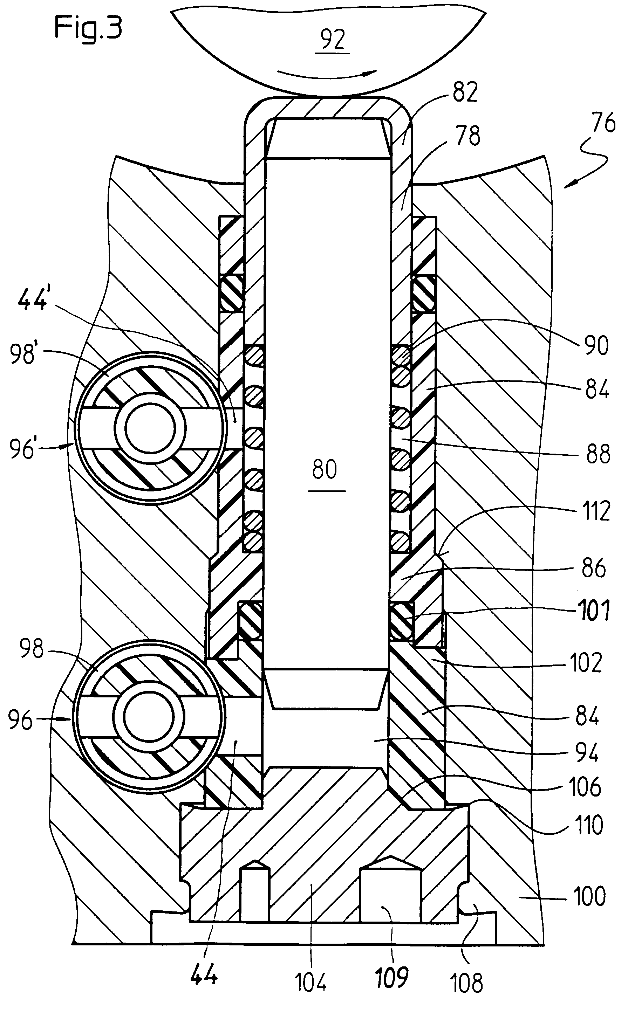

Die erfindungsgemäße Kolbenpumpe läßt sich auch als Mehrkanalpumpe ausbilden, wie anhand der in Figur 3 dargestellten Zweikanalpumpe 76 erläutert. Zur Vermeidung von Wiederholungen werden nachfolgend im wesentlichen nur die Unterschiede gegenüber der in Figuren 1 und 2 dargestellten Kolbenpumpe 10 erläutert. Im übrigen werden die Ausführungen zu Figuren 1 und 2 in Bezug genommen. Die in Figur 3 dargestellte Kolbenpumpe 76 weist einen Stufenkolben 78 auf, der aus einem stiftförmigen Kolbenteil 80 besteht, auf das eine einseitig geschlossene Kolbenhülse 82 aufgepreßt ist, die etwas weniger als die Hälfte der Länge des Kolbenteils 80 hat. Der Stufenkolben 78 ist in einer Laufbuchse 84 verschiebbar gelagert. Die Laufbuchse 84 der Kolbenpumpe 76 weist einen nach innen stehenden, umlaufenden ringförmigen Führungsabschnitt 86 auf, der eine radiale Höhe hat, die einer Wanddicke der Kolbenhülse 82 entspricht. Der Stufenkolben 78 liegt mit seinem Kolbenteil 80 am Führungsabschnitt 86 an und wird von diesem geführt. Zwischen dem Kolbenteil 80, der Laufbuchse 84, der Kolbenhülse 82 und dem Führungsabschnitt 86 ist ein ringförmiger Mantelraum eingeschlossen, der einen zweiten Verdrängungsraum 88 der Zweikanalpumpe 76 bildet.

In den Verdrängungsraum 88 ist eine Schraubendruckfeder als Kolbenrückstellfeder 90 eingesetzt, die sich am Führungsabschnitt 86 der Laufbuchse 84 abstützt und den Stufenkolben 78 mit seiner Kolbenhülse 82 gegen den Umfang eines elektromotorisch rotierend antreibbaren Exzenters 92 drückt, der zum Antrieb des Stufenkolbens 78 zu einer hin- und hergehenden Hubbewegung dient. Ein erster Verdrängungsraum 94 der Zweikanalpumpe 76 auf einer dem Exzenter 92 abgewandten Stirnseite des Stufenkolbens 78 hat einen lediglich geringfügig längeren Hubraum, als es dem Pumpenhub entspricht, so daß der Totraum des Verdrängungsraums 94 nahezu null ist.

Die Zweikanalpumpe 76 hat eine erste Ventilpatrone 96 und eine zweite Ventilpatrone 96'. Die Ventilpatrone 96 ist gleich aufgebaut wie die in der Figur 2 dargestellte Ventilpatrone 51 des ersten Ausführungsbeipiels. Das heißt, die Ventilpatrone 96 umfaßt ein Einlaßventil und ein Auslaßventil. Auch die zweite Ventilpatrone 96' ist identisch aufgebaut wie die Ventilpatrone 51. Die zweite Ventilpatrone 96' umfaßt also ebenfalls ein Einlaßventil und ein Auslaßventil. Weil beide Ventilpatronen 96 und 96' im Längsschnitt gleich aussehen wie die Ventilpatrone 51 (Fig. 2) des ersten Ausführungsbeipiels, wird auf eine Darstellung des Längsschnitts der Ventilpatronen 96, 96' verzichtet. Beide Venitlpatronen 96, 96' sind in je eine Ventilbohrung 98 und 98' eingesetzt, die tangential zur Zylinderbohrung der Kolbenpumpe 76 in einem ein Pumpengehäuse 100 bildenden Hydraulikblock angebracht sind. Beide Ventilbohrungen 98, 98' schneiden die Laufbuchse 84. Die erste Ventilbohrung 98 ergibt einen gedachten ersten Anschnitt des Außenumfangs der Laufbuchse 84. Die Verbindungsbohrung 44 verbindet den ersten Anschnitt mit dem ersten Verdrängungsraum 94. Die zweite Ventilbohrung 98' ergibt einen gedachten zweiten Anschnitt des Außenumfangs der Laufbuchse 84. Eine Verbindungsbohrung 44' verbindet den zweiten Anschnitt mit dem zweiten Verdrängungsraum 88. Beide Anschnitte sind bereits an der Laufbuchse 84 angebracht, bevor diese in das Pumpengehäuse 100 eingesetzt wird.

Die Ventilbohrugnen 98, 98' verlaufen quer zur Zylinderbohrung, in der sich der Kolben 78 befindet. Der Abstand zwischen der Längsachse der Ventilbohrung 98 und der Längsachse der Zylinderbohrung ist einerseits möglichst klein, so daß die Ventilbohrung 98 die Laufbuchse 84 an ihrem Außenumfang ausreichend schneidet, damit das Ein- und das Auslaßventil der Ventilpatrone 96 über die Verbindungsbohrung 44 in der Laufbuchse 84 mit dem ersten Verdrängungsraum 94 kommunizieren kann. Diese Anordnung ergibt einen besonders kleinen Totraum zwischen dem Verdrängungsraum 94 und dem Ein- und Auslaßventil der Ventilpatrone 96. Anderereseits ist der Abstand mindestens so groß gewählt, daß die Ventilpatrone 96 die Bewegung des Kolbens 78 nicht stört. Weil die Ventilpatrone 96 durch den am Außenumfan der Laufbuchse 84 für die Ventilpatrone 96 vorgesehenen Anschnitt verläuft, ist sichergegestellt, daß die Verbindungsbohrung 44 in Richtung der Ventilbohrung 98 ausgerichtet ist. Die Ventilpatrone 96 bildet eine Verdrehsicheung für die Laufbuchse 84. Entsprechendes gilt auch für den Abstand zwischen der Längsachse der Ventilbohrung 98' und der Längsachse der Zylinderbohrung. Und das Gleiche gilt ebenso auch beim ersten Ausführungsbeispiel (Fig. 1,2) für den Abstand zwischen der Längsachse der Ventilbohrung 38 und der Längsachse der den Kolben 16 enthaltenden Zylinderbohrung.

Die Ventilbohrungen 38 bzw. 98, 98' sind so vorgesehen, daß sie sich oberhalb der den Kolben 16 bzw. 78 enthaltenden Zylinderbohrung befinden, wenn sich die Kolbenpumpe 10 bzw. 76 fertig eingebaut in ihrer vorgesehenen Betriebslage befindet. In der Betriebslage verläuft die Zylinderbohrung vorzugsweise horizontal und die Ventilbohrungen 38, 98, 98' verlaufen vorzugsweise horizontal oberhalb der Zylinderbohrung. Damit ist sichergestellt, daß in den Verdrängungsräumen 42 (Fig. 1) bzw. 88 und 94 (Fig. 3) eventuell vorhandene Luft entweichen kann. In Draufsicht betrachtet verlaufen die Ventilbohrungen 38, 98, 98' senkrecht zur Zylinderbohrung.

Die Laufbuchse 84 ist zweiteilig ausgebildet, sie ist aus zwei rohrförmigen Teilen zusammengesteckt. Die Laufbuchse 84 ist radial auf einer dem Exzenter 92 abgewandten Seite des Führungsabschnitts 86 geteilt. In eine Nut zwischen den beiden Teilen der Laufbuchse 84 ist ein Dichtring 101 eingelegt. Der Dichtring 101 trennt die beiden Verdrängungsräume 88 und 94 voneinander.

Während eines Ausfahrhubs des Kolbens 78 vergrößert sich der erste Verdrängungsraum 94, und es wird Druckmedium aus einem ersten Zulaufkanal (nicht dargestellt) durch das in der Ventilpatrone 96 vorgesehene Einlaßventil in den Verdrängungsraum 94 angesaugt. Gleichzeitig vergrößert sich auch der zweite Verdrängungsraum 88, und es wird Druckmedium aus einem zweiten Zulaufkanal (ebenfalls nicht dargestellt) durch das in der zweiten Ventilpatrone 96' vorgesehene Einlaßventil in den zweiten Verdrängungsraum 88 angesaugt.

Während eines Einfahrhubs des Kolbens 78 verkleinert sich der errste Verdrängungsraum 94 und es wird Druckmedium aus dem Verdrängungsraum 94 durch das in der Ventilpatrone 96 vogesehene Auslaßventil in einen ersten Abströmkanal (nicht dargestellt) verdrängt. Gleichzeitig verkleinert sich auch der zweite Verdrängungsraum 88 und es wird Druckmedium aus dem zweiten Verdrängungsraum 88 durch das in der zwiten Ventilpatrone 96' vorgesehene Auslaßventil in einen zweiten Abströmkanal (ebenfalls nicht dargestellt) verdrängt.

Je nach Bedart ist die Kolbenpumpe so gebaut, daß die beiden Zulaufkanäle hydraulisch voneinander getrennt oder hydraulisch miteinander verbunden sind. Entsprechendes gilt auch für die beiden Abströmkanäle. In den beiden hydraulisch voneinander getrennten Verdrängungssräumen 88 und 94 können unterscheidliche hohe Drücke herrschen.

Um eine winkelrichtige Ausrichtung der beiden Teile der Laufbuchse 84 sicherzustellen, weist eines der Teile der Laufbuchse 84 eine Nase 102 auf, die in eine komplementäre Ausnehmung des anderen Teils der Laufbuchse 84 eingreift. Ebenso ist die Winkelstellung der Laufbuchse 84 in bezug auf ein Verschlußelement 104 mit einer dreiecksförmigen Nase 106 des Verschlußelements 104 sichergestellt, die in eine komplementäre Ausnehmung der Laufbuchse 84 eingreift. Das Verschlußelement 104 ist zylindrisch, es verschließt die Laufbuchse 84 auf einer dem Exzenter 92 abgewandten Seite. Mit einer Verstemmung 108 ist das Verschlußelement 104 im Pumpengehäuse 100 druckdicht gehalten. Die beiden Teile der Laufbuchse 84 und das Verschlußelement 104 werden vor dem Einbau in das Pumpengehäuse 100 fest zusammengesteckt. An der nach außen weisenden Stirnseite des Verschlußelements 104 sind eine größere und eine kleinere Sackbohrung vorgesehen. Die beiden Sackbohrungen bilden eine Markierung 109, so daß die Laufbuchse 84 von außen erkennbar winkelrichtig in das Pumpengehäuse 100 eingebaut werden kann. Eine entsprechende Markierung (nicht dargestellt) ist vorzugsweise auch bei dem Verschlußelement 28 (Fig. 1) vorgesehen.

Das Verschlußelement 104 weist eine umlaufende Schneidkante 110 auf, mit der sich das Verschlußelement 104 beim Einpressen in das Pumpengehäuse 100 einformt. Die Schneidkante 110 stellt sicher, daß sowohl das Verschlußelement 104 als auch die Laufbuchse 84 mit einer konischen Ringschulter 112 fest im Pumpengehäuse 100 anliegen. Ein Axialspiel der Laufbuchse 84 wird dadurch vermieden.

Beiden beschriebenen und dargestellten Ausführungsbeispielen der Erfindung ist gemeinsam, daß ihre Einzelteile weitgehend spanlos und damit schnell und preiswert herstellbar sind. Bei der erfindungsgemäß vorgeschlagenen Kolbenpumpe erhält man mit einem Minimum an Bauaufwand, einem Minimum an Bauvolumen und einem Maximum an Funktionssicherheit eine einkanalige Kolbenpumpe mit einem Verdrängungsraum (Fig. 1, 2) oder eine mehrkanalige Kolbenpumpe mit mehreren, beispielsweise zwei, hydraulisch getrennten Verdrängungsräumen (Fig. 3).

## Patentansprüche

1. Kolbenpumpe mit einem eine Zylinderbohrung aufweisenden Pumpengehäuse, und mit einem Kolben, der in der Zylinderbohrung axial verschieblich geführt und der zu einer in axialer Richtung hin- und hergehenden Hubbewegung antreibbar ist und mit einem Rückschlagventil, **dadurch gekennzeichnet,** daß das Rückschlagventil (34, 36; 96, 96') in einer zur Zylinderbohrung tangentialen Ventilbohrung (38, 98, 98') mit geringem Abstand zur Zylinderbohrung im Pumpengehäuse (14; 100) angeordnet ist.

2. Kolbenpumpe nach Anspruch 1, **dadurch gekennzeichnet,** daß die Kolbenpumpe (10; 76) zwei Rückschlagventile (34, 36; 96, 96') aufweist, die gemeinsam in der Ventilbohrung (38; 98, 98') angeordnet sind.

3. Kolbenpumpe nach Anspruch 2, **dadurch gekennzeichnet,** daß die beiden Rückschlagventile (34, 36; 96) in einer Ventilpatrone (51; 96, 96') untergebracht sind, die in die Ventilbohrung (38; 98, 98') eingesetzt ist.

4. Kolbenpumpe nach Anspruch 1, **dadurch gekennzeichnet,** daß die Kolbenpumpe (10; 76) ein zylindrisches Filtersieb (64) aufweist, das in der Ventilbohrung (38; 98, 98') angeordnet ist.

5. Kolbenpumpe nach Anspruch 1, **dadurch gekennzeichnet,** daß die Kolbenpumpe (10; 76) eine Laufbuchse (12; 84) aufweist, die in das Pumpengehäuse (14; 100) eingesetzt ist und daß die Laufbuchse (14; 84) an einer Umfangsfläche von der Ventilbohrung (38; 98) geschnitten wird und einen tangentialen, zylinderförmigen Anschnitt (40) aufweist, der mit der Ventilbohrung (34; 98) fluchtet.

6. Kolbenpumpe nach Anspruch 1, **dadurch gekennzeichnet,** daß die Kolbenpumpe einen Verdrängungskörper (32) aufweist, der in einem Verdrängungsraum (42; 94) der Kolbenpumpe (10; 76) angeordnet ist.

7. Kolbenpumpe nach Anspruch 1, **dadurch gekennzeichnet,** daß die Kolbenpumpe (10) eine in einem Verdrängungsraum (42) angeordnete Kolbenrückstellfeder (26) aufweist, und daß einander zugewandte Windungsflächen der Kolbenrückstellfeder (26) zumindest näherungsweise komplementär zueinander sind.

8. Kolbenpumpe nach Anspruch 7, **dadurch gekennzeichnet,** daß die Kolbenrückstellfeder (26) rechteckförmigen Windungsquerschnitt aufweist.

9. Kolbenpumpe nach einem der vorhergehenden Ansprüche, **dadurch gekennzeichnet,** daß die Kolbenpumpe (76) eine Mehrkanalpumpe ist.

10. Kolbenpumpe nach Anspruch 9, **dadurch gekennzeichnet,** daß mehrere zur Zylinderbohrung tangentiale Ventilbohrungen (98, 98') mit geringem Abstand zur Zylinderbohrung vorgesehen sind, in denen Rückschlagventile (96) angeordnet sind, die mit einem jeweiligen Verdrängungsraum (88, 94) kommunizieren.

11. Kolbenpumpe nach Anspruch 9, **dadurch gekennzeichnet,** daß mindestens einer der Verdrängungsräume (88) der Kolbenpumpe (76) von einer auf den Kolben (78, 80) aufgebrachten Kolbenhülse (82) begrenzt wird.

12. Kolbenpumpe nach einem der vorhergehenden Ansprüche, **dadurch gekennzeichnet,** daß die Kolbenpumpe (76) ein Verschlußelement (104) aufweist, das die Zylinderbohrung auf einer Seite druckdicht verschließend in das Pumpengehäuse (100) eingepreßt ist und daß das Verschlußelement (104) eine umlaufende Schneidkante (110) aufweist, mit der es sich beim Einpressen in das Pumpengehäuse (100) einformt.
